# EUROPÄISCHE PATENTSCHRIFT

(11) **EP 1 053 497 B1**
(45) Veröffentlichungstag und Bekanntmachung des Hinweises auf die Patenterteilung: **27.03.2002**
(21) Anmeldenummer: 99907291.1
(22) Anmeldetag: 28.01.1999
(51) Int. Cl.: G02B 21/00, G01J 3/14

(54) **VORRICHTUNG ZUR GLEICHZEITIGEN DETEKTION MEHRERER SPEKTRALBEREICHE EINES LICHTSTRAHLS**
DEVICE FOR SIMULTANEOUSLY DETECTING SEVERAL SPECTRAL RANGES OF A LIGHT BEAM
DISPOSITIF POUR LA DETECTION SIMULTANEE DE PLUSIEURS ZONES SPECTRALES D'UN FAISCEAU LUMINEUX

(30) Priorität: 28.01.1998 DE 19803151
(43) Veröffentlichungstag der Anmeldung: 22.11.2000
(73) Patentinhaber: Leica Microsystems Heidelberg GmbH, 69120 Heidelberg (DE)
(72) Erfinder: ENGELHARDT, Johann, D-76669 Bad Schönborn (DE)
(74) Vertreter: Reichert, Werner F., Dr.
(86) Internationale Anmeldenummer: DE9900210
(87) Internationale Veröffentlichungsnummer: WO9939231

(56) Entgegenhaltungen:
- WO-A-92/01966
- DE-A- 4 419 940
- DE-A- 19 633 185
- US-A- 3 004 465

## Beschreibung

Die Erfindung betrifft eine Vorrichtung zur gleichzeitigen Detektion mehrerer Spektralbereiche eines Lichtstrahls, insbesondere zur Detektion des Lichtstrahls eines Laserscanners im Detektionsstrahlengang eines Konfokalmikroskops.

Vorrichtungen zur gleichzeitigen Detektion mehrerer Spektralbereiche eines Lichtstrahls sind aus der Praxis seit geraumer Zeit bekannt z.B. aus der DE 44 19 940, und zwar unter der Bezeichnung "Multibanddetektor". Dabei handelt es sich um aufwendige optische Anordnungen, die mit zusätzlicher Optik eine Mehrfachfokussierung ermöglichen. Solche Anordnungen erfordern zur spektralen Multibanddetektion einen ganz erheblichen Raum, verursachen demnach eine nicht unbeachtliche Baugröße. Darüber hinaus tritt dort regelmäßig ein Defokussierungseffekt auf, so daß ein zusätzliches Nachfokussieren mit der zusätzlichen Optik ― bezogen auf den jeweiligen Spektralbereich ― erforderlich ist.

Der Erfindung liegt daher die Aufgabe zugrunde, eine Vorrichtung zur gleichzeitigen Detektion mehrerer Spektralbereiche eines Lichtstrahls, insbesondere zur Detektion des Lichtstrahls eines Laserscanners im Detektionsstrahlengang eines Konfokalmikroskops, derart auszugestalten und weiterzubilden, daß bei einfachem Aufbau eine geringe Baugröße realisierbar ist, wobei der im Stand der Technik auftretende Defokussiereffekt weitestgehend vermieden sein soll.

Die erfindungsgemäße Vorrichtung der gattungsgemäßen Art löst die voranstehende Aufgabe durch die Merkmale des Patentanspruches 1.

Erfindungsgemäß ist erkannt worden, daß die gleichzeitige Detektion mehrerer Spektralbereiche eines Lichtstrahls dann ohne weiteres möglich ist, wenn man den Lichtstrahl zunächst spektral auffächert und anschließend aus der Dispersionsebene heraus eine Aufspaltung des aufgefächerten Strahls vornimmt. Die Aufspaltung des aufgefächerten Strahls aus der Dispersionsebene heraus erfolgt in erfindungsgemäßer Weise mittels einer besonderen optischen Anordnung, wobei die in Spektralbereiche aufgespalteten Teilstrahlen bzw. die Spektralbereiche selbst detektiert werden, und zwar gleichzeitig. Wesentlich ist hier, daß der eigentlichen Aufspaltung in Spektralbereiche ein Auffächern des Lichtstrahls vorangeht, so daß die Aufspaltung aus der Dispersionsebene heraus am aufgefächerten Strahl stattfinden kann. Eine Mehrfachfokussiertung mit zusätzlicher Optik ist hier jedenfalls nicht erforderlich.

Wie bereits zuvor ausgeführt, sind erfindungsgemäß zwei optische Anordnungen vorgesehen, nämlich einmal zum spektralen Auffächern des Lichtstrahls und ein anderes Mal zum Aufspalten und anschließenden Detektieren. Der Anordnung zum spektralen Auffächern des Lichtstrahls kann ein Pinhole vorgeschaltet sein, auf das der ankommende Lichtstrahl fokussiert ist, wobei das Pinhole einem Laserscanner unmittelbar nachgeschaltet sein kann. Wesentlich ist jedenfalls die Fokussierung des Lichtstrahls auf das im Strahlengang angeordnete Pinhole.

Von dort aus verläuft der divergente Strahl zu der Anordnung zum spektralen Auffächern des Lichtstrahls, wobei diese Anordnung Fokussieroptiken und Dispersionsmittel umfaßt. Die Dispersionsmittel können im Hinblick auf eine besonders einfache Konstruktion als Prisma ausgeführt sein. Vor und nach den Dispersionsmitteln bzw. dem Prisma ist in weiter vorteilhafter Weise jeweils eine Fokussieroptik angeordnet, die wiederum eine Linsenanordnung umfassen kann.

Der von dem Pinhole zum Prisma verlaufende divergente Strahl wird durch die Fokussieroptiken in die später noch zu erläuternde Spalt-/Detektoranordnung fokussiert, von wo aus die Aufspaltung in Spektralbereiche stattfindet.

Insbesondere im Hinblick auf eine geringe Baugröße sind der Anordnung zum Auffächern des Lichtstrahls Reflexionsmittel zur Rückfaltung des aufgefächerten Strahls nachgeordnet, wobei es sich bei den Reflexionsmitteln um eine verspiegelte Fläche bzw. um einen Spiegel handeln kann. Jedenfalls erlaubt die zumindest einmalige Rückfaltung des aufgefächerten Strahls eine geringe Baugröße der gesamten Vorrichtung.

Wie bereits zuvor erwähnt, ist der Lichtstrahl mittels der Fokussieroptiken in die Spalt-/Detektoranordnung fokussierbar. Diese Spalt-/Detektoranordnung ist demnach im Strahlengang des aufgefächerten Strahls angeordnet und umfaßt Spaltblenden bildende Reflexionsflachen, die den aufgefächerten Strahl einerseits durch Spaltbildung und andererseits durch Reflexion aus der Dispersionsebene heraus in mehrere Teilstrahlen und somit die einzelnen Spektralbereiche auf die entsprechenden Detektoren abbilden. Mit anderen Worten dienen die Spaltblenden zum teilweisen Durchlassen des dort ankommenden Strahls ― entsprechend der Blendenbreite - und anderseits zur R eflexion an den dort vorgesehenen Reflexionsflächen, so daß bereits bei einer Spaltblende und zwei Reflexionsflächen (beidseits je eine R eflexionsfläche zur Bildung der Spaltblende) eine Zerlegung in drei Teilstrahlen und somit in drei Spektralbereiche möglich ist. Diese Aufteilung erfolgt am aufgefächerten Strahl aus dessen Dispersionsebene heraus.

Selbstverständlich kann sowohl der an der Spaltblende durchgelassene Teilstrahl als auch der reflektierte Teilstrahl abermals auf eine Spaltblende auftreffen und dort weiter gemäß voranstehender Erläuterung zerlegt werden. Die Zerlegung in mehrere Teilstrahlen ist somit durch Mehrfachanordnung von Spaltblenden mit entsprechenden Reflexionsflächen möglich.

Die aufgespaltenen Teilstrahlen gelangen unmittelbar zu Detektoren, wobei die Anzahl der Detektoren der Anzahl der Teilstrahlen entspricht.

Für die hier vorgesehenen Spaltblenden ist des weiteren wesentlich, daß sie in etwa im Fokus des aufgefächerten Strahls plaziert bzw. angeordnet sind. Die Reflexionsflächen der Spaltblenden sind als verspiegelte Flächen bzw. Spiegel ausgeführt, wobei sich die verspiegelten Flächen entsprechend dem Trägermaterial beispielsweise aufdampfen lassen.

Hinsichtlich einer konkreten Ausgestaltung der Spaltblenden ist es von Vorteil, wenn die verspiegelte Fläche einer die Spaltblende bildenden Spaltblendebacke zugeordnet ist und wenn die Spaltblendenbacke in ihrer die Spaltblende, den zu reflektierenden Bereich des aufgefächerten Strahls und ggf. den Reflexionswinkel definierenden Position einstellbar bzw. verstellbar oder verschiebbar ist. Somit läßt sich durch Einstellen der Spaltblendenbacke nicht nur der Spektralbereich des durchgelassenen Teilstrahls sowie der reflektierte Teilstrahl festlegen, sondern auch die Richtung, in die die reflektierten Teilstrahlen laufen. Die Anordnung der Detektoren ist somit zumindest in einem gewissen Bereich variabel.

Im Konkreten könnten die Spaltblendenbacken als jeweils kubischer oder beispielsweise auch vierkantiger Stab mit zumindest teilweise verspiegelter Fläche ausgeführt sein. Eine der Flächen dient dann ― zumindest teilweise ― als Reflexionsfläche, wobei es sich dabei um die an den eigentlichen Spalt angrenzende Fläche handelt. Zur Herstellung der Spaltblendenbacke kommt ein Glas-Vollkörper in Frage, der entsprechend dem verwendeten Glastyp bereits eine Totalreflexion an seiner Oberfläche bieten kann. Außerdem läßt sich Glas einfach bearbeiten und verfügt über einen äußerst geringen thermischen Ausdehnungskoeffizienten, so daß eine temperaturabhängige Justage der Anordnung nicht erforderlich ist.

In weiter vorteilhafter Weise sind die Spaltblendenbacken im Sinne eines Schiebers mit drehangetriebener Spindel bzw. mit entsprechendem Gewindegang ausgeführt. Insoweit könnte die Einstellung der Spaltblendenbacken über Aktvatoren erfolgen, die einen Vorschub und ggf. eine Drehung der verspiegelten Fläche der Spaltblendenbacke verursachen. Durch Verstellen der Position der Spaltblendenbacke läßt sich die Spaltbreite und die Breite des reflektierten Strahls und somit der jeweilige Spektralbereich einstellen. Durch Verstellen der Winkelstellung der Spaltblendenbacke und somit des Reflexionswinkels ist eine Justierung auf fest positionierte Detektoren möglich. Bei den Aktvatoren kann es sich um beliebige Handbetätigungen handeln. In vorteilhafter Weise dienen als Aktvatoren Elektromotore, insbesondere Elektromotore mit Feintrieb.

Innerhalb der Spalt-/Detektoranordnung können Maßnahmen zur Unterdrückung von Streulicht vorgesehen sein, so bspw. sogenannte Strahlfallen oder Blenden, wie sie zur Streulichtunterdrückung aus dem Stand der Technik hinlänglich bekannt sind.

Als Detektoren für die unterschiedlichen Spektralbereiche bzw. Farben lassen sich jedwede herkömmliche Detektoren, vorzugsweise Photomultiplier, verwenden. So ist es beispielsweise auch möglich, handelsübliche CCD-Sensoren zu verwenden.

Im Hinblick auf eine kompakte Bauweise der gesamten Vorrichtung ist es von Vorteil, wenn die Anordnung zum spektralen Auffächern des Lichtstrahls und die Spalt-/Detektoranordnung von einem einzigen Chassis getragen werden, welches unmittelbar am Laserscanner montiert bzw. festlegbar ist. Die Spalt/Detektoranordnung mit den dort vorgesehenen Spaltblendenbacken könnte in einem als Einschub handhabbaren Gehäuse angeordnet sein. Der Einschub könnte wiederum zur Einstellung des Einfallswinkels und der Dispersionsebene des aufgefächerten Strahls in seiner Position justierbar sein.

Schließlich ist es auch denkbar, daß das Gehäuse für die Spalt/Detektoranordnung thermisch weitgehend isoliert ist, um nämlich thermische Einflüsse auf die dortige Anordnung wirksam zu vermeiden.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung eines Ausführungsbeispiels der Erfindung anhand der Zeichnung zu verweisen. In Verbindung mit der Erläuterung des bevorzugten Ausführungsbeispiels der Erfindung werden auch im allgemeinen bevorzugte Ausgestaltungen und Weiterbildungen der Lehre erläutert. In der Zeichnung zeigt
- Fig. 1: in einer schematischen Darstellung ein Ausführungsbeispiel einer erfindungsgemäßen Vorrichtung zur gleichzeitigen Detektion mehrerer Spektralbereiche eines Lichtstrahls, wobei dort die Spalt-/Detektoranordnung als Black-Box dargestellt ist;
- Fig. 2: in einer schematischen Prinzip-Darstellung die Funktionsweise der Spalt-/Detektoranordnung und
- Fig. 3: in einer schematischen Darstellung eine mögliche prinzipielle Anordnung der Bauteile der Spalt-/Detektoranordnung.

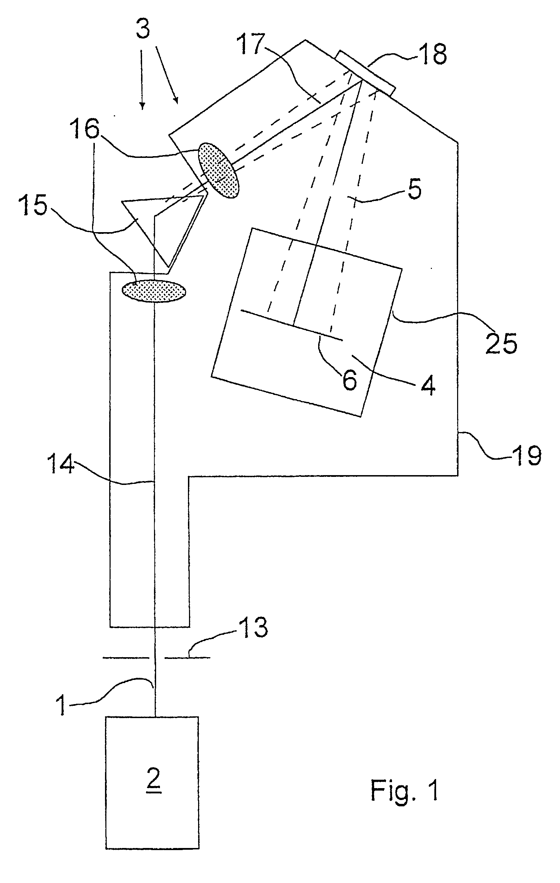

Fig. 1 zeigt in schematischer Darstellung ein Ausführungsbeispiel einer Vorrichtung zur gleichzeitigen Detektion mehrerer Spektralbereiche eines Lichtstrahls 1, wobei es sich hier um eine Vorrichtung zur Detektion des Lichtstrahls 1 eines lediglich schematisch angedeuteten Laserscanners 2 im Detektionsstrahlengang eines in der Figur nicht gezeigten Konfokalmikroskops handelt.

Erfindungsgemäß umfaßt die Vorrichtung eine Anordnung 3 zum spektralen Auffächern des Lichtstrahls 1 und ein nachfolgend stets als Spalt/Detektoranordnung 4 bezeichnete Anordnung zur Aufspaltung des aufgefächerten Strahls 5 aus der Dispersionsebene 6 heraus in Spektralbereiche 7, 8, 9 und zur anschließenden Detektion der aufgespalteten Spektralbereiche 7, 8, 9 mittels Detektoren 12, 10, 11.

In Fig. 1 ist angedeutet, daß der Anordnung 3 zum spektralen Auffächern des Lichtstrahls 1 ein Pinhole 13 vorgeschaltet ist, auf das der ankommende Lichtstrahl 1 fokussiert ist. Von dort aus verläuft der divergente Lichtstrahl 14 zu einem Prisma 15, wobei vor und nach dem Prisma 15 Fokussieroptiken 16 angeordnet sind. Dort wird der divergente Lichtstrahl 14 in die Spalt/Detektoranordnung 4 fokusiert, wobei dieser zur Rückfaltung des durch das Prisma 15 aufgefächerten Strahls 17 zunächst auf einen Spiegel 18 trifft und von dort in die Spalt-/Detektoranordnung 4 gelangt, und zwar mit entsprechender Fokussierung.

Fig. 1 läßt des weiteren erkennen, daß sowohl die Anordnung 3 zum spektralen Auffächern des Lichtstrahls 1 als auch die Spalt/Detektoranordnung 4 einem Chassis 19 zugeordnet sind, wobei das Chassis 19 unmittelbar am Laserscanner 2 fixiert werden kann. Dies ist insbesondere durch die kompakte Bauweise der gesamten Anordnung möglich.

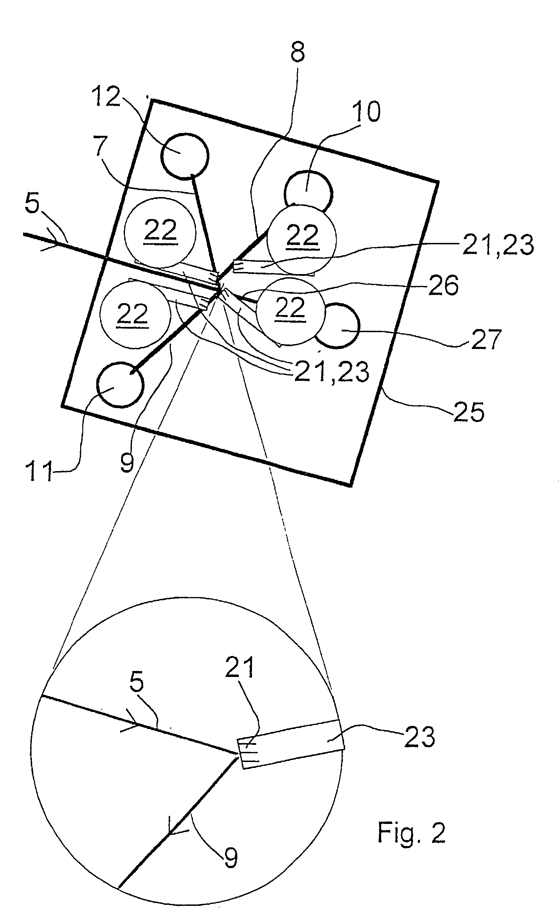

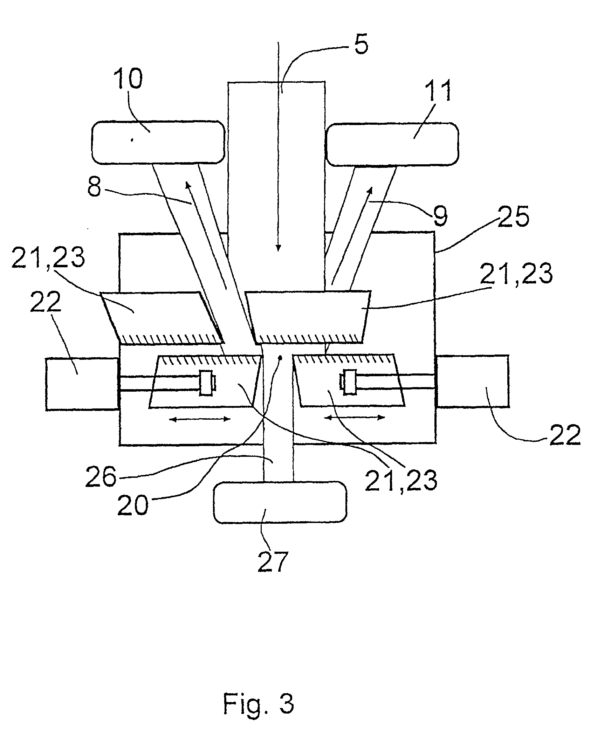

Die Figuren 2 und 3 zeigen einerseits die prinzipielle Funktionsweise und andererseits die grundsätzliche Anordnung der jeweiligen Bauteile innerhalb der Spalt-/Detektoranordnung 4.

In der Spalt-/Detektoranordnung 4 wird der aufgefächerte Strahl 17 bzw. 5 durch die Spaltblendenbacken 23 und den verspiegelten Flächen 21 in mehrere Teilstrahlen bzw. Spektralbereiche 7, 8, 9 aus der Dispersionsebene 6 heraus zu den Detektoren 10, 11, 12 geleitet. Bei der in Fig. 2 gewählten Darstellung liegt die Dispersionsebene 6 senkrecht zu der Zeichenebene (ihre Projektion ist mit Bezugszeichen 5 gekennzeichnet). Bei der in Fig. 3 gewählten Darstellung liegt die Dispersionsebene 6 in der Zeichenebene.

Bei der Darstellung in Fig. 2 sind sowohl die Detektoren 10, 11, 12 als auch die als Elektromotoren ausgeführten Aktvatoren 22 lediglich schematisch gezeigt. Gleiches gilt für die den Spalt 20 bildende Spaltblendenbacken 23 nebst der verspiegeltenden Flächen 21, die unmittelbar an den Spaltblendenbacken 23 vorgesehen sind.

Fig. 2 zeigt des weiteren eine Vergrößerung eines reflektierten Spektralbereichs 9, wobei die Reflexion an der verspiegelten Stirnseite einer Spaltblendenbacke 23 stattfindet.

Fig. 3 zeigt deutlich, daß Teile des in die Spalt-/Detektoranordnung 4 einlaufenden, spektral aufgefächerten Strahls 5 an den verspiegelten Flächen 21 nach oben und nach unten zu den Detektoren 10, 11 abgelenkt werden. Ein weiterer Teilstrahl bzw. Spektralbereich 7 passiert den Spalt 20 und gelangt zum Detektor 12.

Die Aktvatoren 22 ermöglichen eine Einstellung des Spalts 20 zwischen den Spaltblendenbacken 23, wodurch eine individuelle Einstellung der Spektralbereiche 7, 8, 9 möglich ist, deren Teilstrahlen schließlich zu den Detektoren 12, 10, 11 gelangen.

Durch die Aufspaltung des einfallenden aufgefächerten Strahls 17 bzw. 5 aus der Dispersionsebene 6 heraus ist es möglich, die Spaltblendenbacken 23 hinreichend genau im Fokus des aufgefächerten Strahls 17 bzw. 5 zu plazieren.

Schließlich sei angemerkt, daß der einfacheren Darstellung wegen in Fig. 3 lediglich zwei der insgesamt vier Aktvatoren 22 dargestellt sind.

### Bezugszeichenliste

- 1: Lichtstrahl (vom Laserstahler kommend)
- 2: Laserscanner
- 3: Anordnung zum spektralen Auffächern des Lichtstrahls 5
- 4: Spalt-/Detektoranordnung
- 5: aufgefächerter Strahl
- 6: Dispersionsebene (des aufgefächerten Strahls)
- 7: Spektralbereich
- 8: Spektralbereich
- 9: Spektralbereich
- 10: Detektor
- 11: Detektor
- 12: Detektor
- 13: Pinhole
- 14: divergenter Lichtstrahl (nach dem Pinhole)
- 15: Prisma
- 16: Fokussieroptiken
- 17: aufgefächerter Strahl (nach dem Prisma)
- 18: Spiegel (zur Rückfaltung)
- 19: Chassis
- 20: Spalt
- 21: verspiegelte Flächen (an den Spaltblendenbacken)
- 22: Aktvatoren
- 23: Spaltblendenbacken
- 24: Gehäuse
- 25: Spektralbereich
- 26: Detektor

## Patentansprüche

1. Vorrichtung zur gleichzeitigen Detektion mehrerer Spektralbereiche eines Lichtstrahls (1), insbesondere zur Detektion des Lichtstrahls (1) eines Laserscanners (2) im Detektionsstrahlengang eines Konfokalmikroskops, mit
einer Anordnung (3) zum spektralen Auffächern des Lichtstrahls (1) und mit einer Spalt/Detektoranordnung (4), **gekennzeichnet durch** mittel (21, 23) zur Aufspaltung des aufgefächerten Strahls (5) aus der Dispersionsebene (6) heraus in mehrere Spektralbereiche (7, 8, 9) und anschließenden separaten Detektion der aufgespaltenen Spektralbereiche (7, 8, 9).

2. Vorrichtung nach Anspruch 1, **dadurch gekennzeichnet, daß** der Anordnung (3) zum spektralen Auffächern des Lichtstrahls (1) ein Pinhole (13) vorgeschaltet ist, auf das der ankommende Lichtstrahl (1) fokussiert ist.

3. Vorrichtung nach Anspruch 1 oder 2, **dadurch gekennzeichnet, daß** die Anordnung (3) zum spektralen Auffächern des Lichtstrahls (1) Fokussieroptiken (16) und Dispersionsmittel umfaßt.

4. Vorrichtung nach Anspruch 3, **dadurch gekennzeichnet, daß** die Dispersionsmittel ein Prisma (15) umfassen.

5. Vorrichtung nach Anspruch 3 oder 4, **dadurch gekennzeichnet, daß** vor und nach den Dispersionsmitteln jeweils eine Fokussieroptik (16) angeordnet ist.

6. Vorrichtung nach Anspruch 5, **dadurch gekennzeichnet, daß** die Fokussieroptiken (16) Linsenanordnungen umfassen.

7. Vorrichtung nach Anspruch 5 oder 6, **dadurch gekennzeichnet, daß** der Lichtstrahl (1) mittels der Fokussieroptiken (16) in die Spalt-/Detektoranordnung (4) fokussierbar ist.

8. Vorrichtung nach einem der Ansprüche 1 bis 7, **dadurch gekennzeichnet, daß** der Anordnung (3) zum Auffächern des Lichtstrahls Reflexionsmittel zur Rückfaltung (18) des aufgefächerten Strahls (5) nachgeordnet sind.

9. Vorrichtung nach Anspruch 8, **dadurch gekennzeichnet, daß** es sich bei den Reflexionsmitteln um einen Spiegel (18) handelt.

10. Vorrichtung nach einem der Ansprüche 1 bis 9, **dadurch gekennzeichnet, daß** der Anordnung (3) zum Auffächern des Lichtstrahls Mittel zur Beugung des aufgefächerten Strahls (5) nachgeordnet sind.

11. Vorrichtung nach Anspruch 10, **dadurch gekennzeichnet, daß** es sich bei dem Mittel zur Beugung um en transparentes Gitter handelt.

12. Vorrichtung nach Anspruch 10, **dadurch gekennzeichnet, daß** es sich bei dem Mittel zur Beugung um ein Reflexionsgitter handelt.

13. Vorrichtung nach einem der Ansprüche 1 bis 9, **dadurch gekennzeichnet, daß** der Anordnung (3) zum Auffächern des Lichtstrahls Mittel zur Brechung des aufgefächerten Strahls (5) nachgeordnet sind.

14. Vorrichtung nach Anspruch 13, **dadurch gekennzeichnet, daß** es sich bei dem Mittel zur Brechung um ein Prisma handelt.

15. Vorrichtung nach einem der Ansprüche 1 bis 14, **dadurch gekennzeichnet, daß** die Spalt-/Detektoranordnung (4) als Mittel zur Aufspaltung im Strahlengang des aufgefächerten Strahls (5) angeordnete, Spaltblenden (20) bildende Reflexionsflächen (21) umfaßt, die den aufgefä cherten Strahl (5) durch Spaltbildung und Reflexion aus der Dispersionsebene (6) heraus in mehrere Teilstrahlen (7, 8, 9) zerlegen.

16. Vorrichtung nach Anspruch 15, **dadurch gekennzeichnet, daß** die Teilstrahlen (7, 8, 9) zu der Anzahl der Teilstrahlen (8, 9. 7) entsprechenden Detektoren (10, 11, 12) geleitet werden.

17. Vorrichtung nach Anspruch 15 oder 16, **dadurch gekennzeichnet, daß** die Spalte (20) in etwa im Fokus des aufgefächerten Strahls (5) plaziert sind.

18. Vorrichtung nach einem der Ansprüche 15 bis 17, **dadurch gekennzeichnet, daß** die Reflexionsflächen als verspiegelte Flächen (21) bzw. Spiegel ausgeführt sind.

19. Vorrichtung nach Anspruch 18, **dadurch gekennzeichnet, daß** die verspiegelte Fläche (21) einer den Spalt (20) bildenden Spaltblendenbacke (23) zugeordnet ist und daß die Spaltblendenbacken (23) in ihrer die Spaltblende (20), den zu reflektierenden Bereich des aufgefächerten Strahls (5) und ggf. den Reflexionswinkel definierenden Position einstellbar bzw. verstellbar ist.

20. Vorrichtung nach Anspruch 19, **dadurch gekennzeichnet, daß** die Spaltblendenbacke (23) als vorzugsweise kubischer oder vierkantiger Stab mit zumindest teilweise verspiegelter Fläche (21) ausgeführt ist.

21. Vorrichtung nach Anspruch 20, **dadurch gekennzeichnet, daß** die Spaltblendenbacke (23) aus Glas gefertigt ist.

22. Vorrichtung nach einem der Ansprüche 19 bis 21, **dadurch gekennzeichnet, daß** die Spaltblendenbacken (23) im Sinne eines Schiebers mit drehangetriebener Spindel bzw. Gewindegang ausgeführt sind.

23. Vorrichtung nach einem der Ansprüche 19 bis 22, **dadurch gekennzeichnet, daß** die Einstellung der Spaltblendenbacken (23) uber Aktvatoren (22) erfolgt, die einen Vorschub und ggf. eine Drehung der verspiegelten Fläche der Spaltblendenbacken (23) verursachen.

24. Vorrichtung nach Anspruch 23, **dadurch gekennzeichnet, daß** die Aktvatoren (22) als Elektromotoren ausgeführt sind.

25. Vorrichtung nach einem der Ansprüche 1 bis 24, **dadurch gekennzeichnet, daß** die Detektoren (10, 11, 12) als CCD-Sensoren ausgeführt sind.

26. Vorrichtung nach einem der Ansprüche 1 bis 25, **dadurch gekennzeichnet, daß** die Anordnung zum spektralen Auffächern des Lichtstrahls (3) und die Spalt-/Detektoranordnung (4) von einem Chassis (19) getragen werden, welches unmittelbar am Laserscanner (2) festlegbar ist.

27. Vorrichtung nach Anspruch 26, **dadurch gekennzeichnet, daß** die Spalt-/Detektoranordnung (4) in einem als Einschub handhabbaren Gehäuse (25) angeordnet ist.

28. Vorrichtung nach Anspruch 27, **dadurch gekennzeichnet, daß** der Einschub zur Einstellung des Einfallswinkels und der Dispersionsebene (6) des aufgefächerten Strahls (5) in seiner Position justierbar ist.

29. Vorrichtung nach Anspruch 27 oder 28, **dadurch gekennzeichnet, daß** das Gehäuse (25) thermisch isoliert ist.

## Claims

1. An apparatus for simultaneous detection of a plurality of spectral regions of a light beam (1), in particular for detection of the light beam (1) of a laser scanner (2) in the detection beam path of a confocal microscope, with an arrangement (3) for spectral spreading of the light beam (1) and with a slit/detector arrangement (4)
**characterized by** means (21, 23) for splitting the spread beam (5) out of the dispersion plane (6) into a plurality of spectral regions (7, 8, 9), and for subsequent and separate detection of the split spectral regions (7, 8, 9).

2. The apparatus as defined in Claim 1, **wherein** the arrangement (3) for spectral spreading of the light beam (1) is preceded by a pinhole (13) onto which the incoming light beam (1) is focused.

3. The apparatus as defined in Claim 1 or 2, **wherein** the arrangement (3) for spectral spreading of the light beam (1) comprises focusing optical systems (16) and dispersion means.

4. The apparatus as defined in Claim 3, **wherein** the dispersion means comprise a prism (15).

5. The apparatus as defined in Claim 3 or 4, **wherein** a respective focusing optical system (16) is arranged before and after the dispersion means.

6. The apparatus as defined in Claim 5, **wherein** the focusing optical systems (16) comprise lens arrangements.

7. The apparatus as defined in Claim 5 or 6, **wherein** the light beam (1) can be focused by the focusing optical systems (16) into the slit/detector arrangement (4).

8. The apparatus as defined in one of Claims 1 through 7, **wherein** reflection means for folding back (18) the spread beam (5) are arranged after the arrangement (3) for spreading the light beam.

9. The apparatus as defined in Claim 8, **wherei**n the reflection means are a mirror (18).

10. The apparatus as defined in one of Claims 1 through 9, **wherein** means for diffracting the spread beam (5) are arranged after the arrangement (3) for spreading the light beam.

11. The apparatus as defined in Claim 10, **wherein** the diffraction means are a transparent grating.

12. The apparatus as defined in Claim 10, **wherein** the diffraction means are a reflective grating.

13. The apparatus as defined in one of Claims 1 through 9, **wherein** means for refracting the spread beam (5) are arranged after the arrangement (3) for spreading the light beam.

14. The apparatus as defined in Claim 13, **wherein** the refraction means are a prism.

15. The apparatus as defined in one of Claims 1 through 14, **wherein** the slit/detector arrangement (4), as means for spreading, arranged in the beam path of the spread beam (5) comprises reflective surfaces (21), forming slit diaphragms (20), which break down the spread beam (5), by slit formation and reflection out of the dispersion plane (6), into a plurality of partial beams (7, 8, 9).

16. The apparatus as defined in Claim 15, **wherein** the partial beams (7, 8, 9) are passed to detectors (10, 11, 12) corresponding to the number of partial beams (7, 8, 9).

17. The apparatus as defined in Claim 15 or 16, **wherein** the slits (20) are placed approximately at the focus of the spread beam (5).

18. The apparatus as defined in one of Claims 15 through 17, **wherein** the reflective surfaces are embodied as mirror-coated surfaces (21) or mirrors.

19. The apparatus as defined in Claim 18, **wherein** the mirror-coated surface (21) is associated with a slit diaphragm jaw (23) forming the slit diaphragm (20); and the slit diaphragm jaws (23) are adjustable or displaceable in terms of their position which defines the slit diaphragm (20), the region of the spread beam (5) to be reflected, and optionally the reflection angle.

20. The apparatus as defined in Claim 19, **wherein** the slit diaphragm jaw (23) is embodied as a preferably cubic or quadrangular bar having an at least partially mirror-coated surface (21).

21. The apparatus as defined in Claim 20, **wherein** the slit diaphragm jaw (23) is fabricated from glass.

22. The apparatus as defined in one of Claims 19 through 21, **wherein** the slit diaphragm jaws (23) are embodied in the manner of a slider with a rotationally driven spindle and thread.

23. The apparatus as defined in one of Claims 19 through 22, **wherein** adjustment of the slit diaphragm jaws (23) is accomplished via actuators (22) that cause an advance and optionally a rotation of the mirror-coated surface of the slit diaphragm jaws (23).

24. The apparatus as defined in Claim 23, **wherein** the actuators (22) are embodied as electric motors.

25. The apparatus as defined in one of Claims 1 through 24, **wherein** the detectors (10, 11, 12) are embodied as CCD sensors.

26. The apparatus as defined in one of Claims 1 through 25, **wherein** the arrangement for spectral spreading of the light beam (3) and the slit/detector arrangement (4) are carried by a chassis (19) that can be fastened directly to the laser scanner (2).

27. The apparatus as defined in Claim 26, **wherein** the slit/detector arrangement (4) is arranged in a housing (25) that can be handled as an insert.

28. The apparatus as defined in Claim 27, **wherein** the insert is adjustable in terms of its position in order to establish the incidence angle and the dispersion plane (6) of the spread beam (5).

29. The apparatus as defined in Claim 27 or 28, **wherein** the housing (25) is thermally insulated.

## Revendications

1. Dispositif de détection simultanée de plusieurs bandes spectrales d'un rayon lumineux (1), en particulier de détection du rayon lumineux (1) d'un scanner laser sur le chemin optique de détection d'un microscope confocal, comportant un arrangement (3) d'étalement spectral du rayon lumineux (1) et un arrangement séparateur/détecteur (4), **caractérisé en ce que** sont prévus des moyens (21, 23) destinés à la séparation du rayon étalé (5), à partir du plan de dispersion (6), en plusieurs bandes spectrales (7, 8, 9), suivie de la détection séparée des bandes spectrales séparées (7, 8, 9).

2. Dispositif suivant la revendication 1, **caractérisé en ce que** l'arrangement (3) d'étalement spectral du rayon lumineux (1) est précédé d'un pin-hole sur lequel est focalisé le rayon lumineux incident (1).

3. Dispositif suivant la revendication 1 ou 2, **caractérisé en ce que** l'arrangement (3) d'étalement spectral du rayon lumineux (1) comprend des optiques de focalisation (16) et des moyens de dispersion.

4. Dispositif suivant la revendication 3, **caractérisé en ce que** les moyens de dispersion comprennent un prisme (15).

5. Dispositif suivant la revendication 3 ou 4, **caractérisé en ce qu'** une optique de focalisation (16) est disposée en amont et en aval des moyens de dispersion.

6. Dispositif suivant la revendication 5, **caractérisé en ce que** les optiques de focalisation (16) comprennent des arrangements de lentilles.

7. Dispositif suivant la revendication 5 ou 6, **caractérisé en ce que** le rayon lumineux (1) est focalisable par les optiques de focalisation (16) sur l'arrangement séparateur/détecteur (4).

8. Dispositif suivant l'une des revendications 1 à 7, **caractérisé en ce que** l'arrangement (3) d'étalement du rayon lumineux est suivi de moyens de réflexion destinés au repliement (18) du rayon étalé (5).

9. Dispositif suivant la revendication 8, **caractérisé en ce que** les moyens de réflexion sont constitués d'un miroir (18).

10. Dispositif suivant l'une des revendications 1 à 9, **caractérisé en ce que** l'arrangement (3) d'étalement du rayon lumineux est suivi de moyens de diffraction du rayon étalé (5).

11. Dispositif suivant la revendication 10, **caractérisé en ce que** les moyens de diffraction sont constitués d'un réseau transparent.

12. Dispositif suivant la revendication 10, **caractérisé en ce que** les moyens de diffraction sont constitués d'un réseau de réflexion.

13. Dispositif suivant l'une des revendications 1 à 9, **caractérisé en ce que** l'arrangement (3) d'étalement du rayon lumineux est suivi de moyens de réfraction du rayon étalé (5).

14. Dispositif suivant la revendication 13, **caractérisé en ce que** les moyens de réfraction sont constitués d'un prisme.

15. Dispositif suivant l'une des revendications 1 à 14, **caractérisé en ce que** l'arrangement séparateur/détecteur comprend comme moyens de séparation des surfaces réfléchissantes (21) formant diaphragmes à fente et disposées sur le chemin optique du rayon étalé (5), qui, par formation d'une fente et par réflexion à partir du plan de dispersion (6), divisent le rayon étalé (5) en plusieurs rayons partiels (7, 8, 9).

16. Dispositif suivant la revendication 15, **caractérisé en ce que** les rayons partiels (7, 8, 9) sont acheminés à des détecteurs (10, 11, 12) en nombre correspondant à celui des rayons partiels (7, 8, 9).

17. Dispositif suivant la revendication 15 ou 16, **caractérisé en ce que** la fente (20) est placée approximativement au point focal du rayon étalé (5).

18. Dispositif suivant l'une des revendications 15 à 17, **caractérisé en ce que** les surfaces réfléchissantes sont réalisées sous forme de surfaces métallisées (21) ou de miroirs.

19. Dispositif suivant la revendication 18, **caractérisé en ce que** la surface métallisée (21) est associée à une joue (23) formant la fente (20) et que la position des joues (23) définissant le diaphragme à fente (20), la plage du rayon étalé (5) à réfléchir et, le cas échéant, l'angle de réflexion est réglable ou déplaçable.

20. Dispositif suivant la revendication 19, **caractérisé en ce que** la joue (23) du diaphragme à fente est réalisée sous forme de barreau de préférence cubique ou à quatre pans, avec au moins une face (21) en partie métallisée.

21. Dispositif suivant la revendication 20, **caractérisé en ce que** la joue (23) du diaphragme à fente est fabriquée en verre.

22. Dispositif suivant l'une des revendications 19 à 21, **caractérisé en ce que** les joues (23) du diaphragme à fente sont réalisées sous forme de coulisseau à broche entraînée en rotation ou à filetage.

23. Dispositif suivant l'une des revendications 19 à 22, **caractérisé en ce que** le réglage des joues (23) du diaphragme à fente est assuré par des actionneurs (22) provoquant une translation et, le cas échéant, une rotation de la surface métallisée des joues (23) du diaphragme à fente.

24. Dispositif suivant la revendication 23, **caractérisé en ce que** les actionneurs (22) sont réalisés sous forme de moteurs électriques.

25. Dispositif suivant l'une des revendications 1 à 24, **caractérisé en ce que** les détecteurs (10, 11, 12) sont réalisés sous forme de capteurs CCD.

26. Dispositif suivant l'une des revendications 1 à 25, **caractérisé en ce que** l'arrangement d'étalement spectral du rayon lumineux (3) et l'arrangement séparateur/détecteur (4) sont portés par un châssis (19) se fixant directement au scanner laser (2).

27. Dispositif suivant la revendication 26, **caractérisé en ce que** l'arrangement séparateur/détecteur (4) est disposé dans une enceinte (25) manipulable sous forme de tiroir.

28. Dispositif suivant la revendication 27, **caractérisé en ce que** le tiroir a une position ajustable pour régler l'angle d'incidence et le plan de dispersion (6) du rayon étalé (5).

29. Dispositif suivant la revendication 27 ou 28, **caractérisé en ce que** l'enceinte (25) est thermiquement isolée.
